# DEMANDE DE BREVET EUROPEEN

(11) **EP 2 505 619 A1**
(43) Date de publication de la demande: **03.10.2012**
(21) Numéro de dépôt: 12161481.2
(22) Date de dépôt: 27.03.2012
(51) Int. Cl.: C09D 7/12, C09D 4/00, C09D 183/04, A47J 36/02

(54) **Article culinaire anti-rayures et procédé de fabrication d'un tel article**

(30) Priorité: 01.04.2011 FR 1152833
(71) Demandeur: SEB S.A., 69130 Ecully (FR)
(72) Inventeur: Berrux, Aurélien, 73290 LA MOTTE SERVOLEX (FR); Barcikowski, Gaëlle, 73100 AIX-LES BAINS (FR)
(74) Mandataire: Novagraaf Technologies

(57) **Abrégé**

La présente invention concerne un article culinaire présentant un fond (2) avec une face intérieure (21) apte à recevoir des aliments et une face extérieure (22) destinée à être disposée du côté d'une source de chaleur, la face extérieure (22) étant revêtue d'un revêtement extérieur (3) sol-gel qui comprend des charges arrondies et se présente sous forme d'un film continu d'un matériau comprenant une matrice d'au moins un polyalcoxylate métallique. Selon l'invention, les charges arrondies (71, 711, 72, 721) sont des charges métalliques, dont une partie fait saillie sur ledit revêtement sol-gel (3) en étant réparties de manière homogène à la surface dudit revêtement (3).

La présente invention concerne également un procédé de fabrication d'un tel article.

## Description

La présente invention concerne de manière générale un article culinaire, dont la face extérieure est munie au niveau du fond d'un revêtement sol-gel compatible avec une utilisation sur une plaque vitrocéramique. La présente invention concerne également un procédé de fabrication d'un tel article.

Par revêtement sol-gel, on entend au sens de la présente invention un revêtement synthétisé par voie sol-gel à partir d'une solution à base de précurseurs en phase liquide, qui se transforme en un solide par un ensemble de réactions chimiques (hydrolyse et condensation) à basse température. Le revêtement ainsi obtenu peut être soit organo-minéral, soit entièrement minéral.

Par revêtement organo-minéral, on entend au sens de la présente invention, un revêtement dont le réseau est essentiellement inorganique, mais qui comporte des groupements organiques, notamment en raison des précurseurs utilisés et de la température de cuisson du revêtement.

Par revêtement entièrement minéral, on entend, au sens de la présente invention, un revêtement constitué d'un matériau entièrement inorganique, exempt de tout groupement organique. Un tel revêtement peut également être obtenu par voie sol-gel avec une température de cuisson d'au moins 400°C, ou à partir de précurseurs de type tétraéthoxysilane (TEOS) avec une température de cuisson qui peut être inférieure à 400°C.

Dans le domaine des revêtements sol-gel, on connaît notamment ceux obtenus à partir de précurseurs alcoxydes métalliques à base de silicium (silanes) ou ceux à base d'aluminium (aluminates). Ces revêtements ont actuellement un développement important dans le domaine des articles culinaires, et en particulier à titre de revêtements antiadhésifs recouvrant la surface interne de cuisson.

Outre une utilisation de ces revêtements à titre de revêtements antiadhésifs, les revêtements de type sol-gel peuvent également être utilisés pour recouvrir la surface extérieure d'articles culinaires. En effet, les revêtements sol-gel, et en particulier ceux développés par voie alcaline, présentent une dureté élevée, qui les rend particulièrement aptes à une utilisation comme revêtement extérieur d'articles culinaires.

Toutefois, cette dureté devient un inconvénient majeur lorsqu'on utilise des plaques de cuisson en vitrocéramique, car le frottement du revêtement sol-gel sur la plaque est alors un frottement de type verre sur verre, conduisant à l'apparition de rayures très préjudiciables non seulement à l'esthétique, mais aussi et surtout au bon fonctionnement de la plaque de cuisson.

Pour remédier à ces problèmes de rayures lors d'une utilisation sur des plaques vitrocéramiques, il est connu de l'homme de l'art d'insérer des billes notamment métalliques dans un revêtement extérieur de type verre (en l'occurrence émaillé) recouvrant le fond de l'article, comme cela est décrit dans le brevet européen EP 2008552 appartenant à la demanderesse. En particulier, dans le brevet européen EP 2008552, la demanderesse a mis au point un procédé dans lequel la composition de la couche d'émail comprenant les billes est sous forme de pâte rhéofluidifiante et thixotrope, adaptée à une application par sérigraphie sur le support (en l'occurrence la face extérieure de l'article au niveau de son fond).

Dans le cadre de la présente invention, la nature et le procédé d'obtention du revêtement sont différents, puisqu'il s'agit d'un revêtement de type sol-gel. Or, les revêtements de type sol-gel ne font intervenir, au stade de la fabrication, que des molécules élémentaires (non polymérisées, par exemple de type silane) et des proportions importantes de solvants. Les compositions de revêtements de type sol-gel sont donc connues pour être particulièrement fluides et donc peu adaptées d'une part à une application par sérigraphie, et d'autre part à la mise en suspension d'une charge dense (par exemple de type métallique) dans la formulation.

Pour remédier à ce problème, la demanderesse a mis au point un procédé de fabrication d'un article culinaire muni d'un revêtement sol-gel comportant des billes denses métalliques, dans lequel la viscosité de la composition sol-gel est modifiée au cours de sa synthèse par ajout d'une cellulose et sa formulation est adaptée à une application par sérigraphie par remplacement de l'alcool généré lors de la phase d'hydrolyse-condensation du ou des précurseurs alcoxydes métalliques par un solvant plus lourd tel qu'un glycol. L'augmentation de la viscosité permet l'incorporation de billes denses (telles que des billes métalliques) car cela permet leur maintien en suspension dans la composition sol-gel et le ralentissement, voire même l'arrêt, de la sédimentation des billes dans la composition sol-gel.

Par ailleurs, l'échange de solvants permet d'éviter un séchage trop rapide de la composition après son application par sérigraphie sur un support, lié à la génération d'alcool léger lors de la synthèse (hydrolyse-condensation) y compris dans les ouvertures de l'écran de toile utilisé pour l'application par sérigraphie.

L'introduction de billes dans un revêtement sol-gel est connue de l'homme du métier. Ainsi, la demande de brevet américain US 2010/0004373 décrit des compositions de revêtement sol-gel hydrophobes et/ou oléphobes, dont la fonction est de permettre une meilleure nettoyabilité des surfaces. Ces compositions à base de silice incorporent des billes de verre, qui sont liées par différentes résines dont une combinaison possible est constituée par un mélange polyéthylène-PTFE. C'est l'inclusion de ces billes dans le revêtement qui le rend hydrophobe ou oléophobe. Ces revêtements présentent toutefois l'inconvénient majeur, lorsqu'ils sont utilisés sur des plaques de cuisson en vitrocéramique, de conduire aussi à des rayures préjudiciables à l'esthétique et au bon fonctionnement de la plaque de cuisson, à cause du frottement de type verre-sur-verre des billes sur la plaque.

L'introduction de particules métalliques dans un revêtement sol-gel est connue de l'homme du métier. Ainsi, la demande de brevet américain US 2007/228033 décrit un revêtement sol-gel recouvrant un ustensile chauffant notamment culinaire (machines à café, cuiseur à riz, plaques chauffantes, grills, appareils à gaufres, friteuses, etc. Le revêtement comprend une première couche servant de couche isolante, qui est obtenue par voie sol-gel à partir d'un précurseur de type organosilane et appliquée par sérigraphie, dans laquelle sont incorporées des particules de différentes tailles et natures. Outre la couche sol-gel isolante, le revêtement sol-gel décrit dans US 2007/228033 peut en outre comporter une couche conductrice, qui peut également être obtenue par voie sol-gel. Dans la couche isolante sol-gel, les particules sont des oxydes sous forme de flocons, ayant pour fonction d'éviter la formation de fissures, notamment lors de refroidissements et réchauffages successifs. Dans la couche conductrice, les particules sont des particules conductrices, notamment métalliques (notamment en argent ou en l'un de ses alliages, ou simplement recouvertes de métal) ou en graphite. Leur teneur dans la couche conductrice est ajustée de manière à obtenir la résistance souhaitée.

La demande de brevet américain US 2007/228033 n'enseigne donc pas que les particules métalliques ont pour effet de réduire l'apparition de rayures sur l'article et/ou sur les plaques de cuisson, car US 2007/22803 n'enseigne pas que ces charges font saillie à la surface de la couche conductrice qui les incorpore, et il n'est pas possible de le déduire de l'enseignement général de ce document, étant donné que les particules conductrices préférées sont sous forme de flocons.

Ainsi, aucun des revêtements de type sol-gel de l'art antérieur susmentionnés ne permet d'éviter ou de réduire l'apparition de rayures sur l'article et/ou les plaques de cuisson.

La présente invention vise donc à proposer au consommateur un article culinaire dont la face extérieure est munie au niveau du fond d'un revêtement sol-gel compatible avec une utilisation sur une plaque vitrocéramique.

Plus particulièrement, la présente invention a pour objet un article culinaire, présentant un fond avec une face intérieure apte à recevoir des aliments et une face extérieure destinée à être disposée du côté d'une source de chaleur, ladite face extérieure étant revêtue d'un revêtement extérieur sol-gel qui comprend des charges arrondies et se présente sous forme d'un film continu d'un matériau comprenant une matrice d'au moins un polyalcoxylate métallique.

Selon l'invention, les charges arrondies sont des charges métalliques, dont une partie fait saillie sur ledit revêtement sol-gel en étant réparties de manière homogène à la surface dudit revêtement.

Par charges arrondies, on entend, au sens de la présente invention, des charges dépourvues d'angles, en particulier de forme ovoïde ou sphérique.

Avantageusement, le revêtement extérieur sol-gel comprend au moins une couche sérigraphique externe contenant les charges arrondies, cette couche ayant pour effet de limiter la surface de contact avec la plaque vitrocéramique et de créer un effet de type « roulement à billes ».

Par couche sérigraphique, on entend, au sens de la présente invention, une couche de revêtement sol-gel obtenue par application par sérigraphie d'une couche de composition sol-gel se présentant sous forme de pâte rhéofluidifiante, présentant de préférence une viscosité comprise entre 0,5 et 5 Pa.s. (entre 5 et 50 Poises).

Avantageusement, le revêtement extérieur sol-gel peut comprendre successivement à partir du fond :
- une première couche de revêtement sol-gel essentiellement exempte de charges arrondies, cette première couche recouvrant la face extérieure du fond, et
- une deuxième couche de revêtement sol-gel comprenant lesdites charges arrondies, cette deuxième couche recouvrant complètement la première couche.

De préférence, la deuxième couche de revêtement sol-gel est partiellement recouverte par une troisième couche de revêtement sol-gel, qui est une couche sérigraphique discontinue constituant un décor et comprenant également des charges arrondies. Les charges arrondies métalliques selon l'invention sont ainsi solidement ancrées dans le revêtement sol-gel, malgré leur surface lisse, usuellement peu favorable à leur ancrage dans le revêtement. Etant donné que la sérigraphie est une technique consistant à appliquer une pâte rhéofluidifiante à travers les mailles d'un écran au moyen d'une racle, une telle technique a pour effet de déposer une couche d'une épaisseur uniforme garantie par le diamètre du fil de l'écran de sérigraphie, ainsi qu'une bonne répartition des billes dans les différentes couches sérigraphique de revêtement sol-gel.

Par ailleurs, pour ce qui concerne plus particulièrement le mode de réalisation préférentiel avec deux couches sérigraphiques de revêtement sol-gel, l'enfoncement des billes dans la troisième couche de revêtement sol-gel (soit la deuxième couche sérigraphique) est contrôlé, d'une part par la présence de billes dans la deuxième couche de revêtement sol-gel (soit la première couche sérigraphique) sous-jacente sur lesquelles peuvent prendre appui au moins certaines des billes de la troisième couche de revêtement sol-gel (soit la deuxième couche sérigraphique). D'autre part, les billes présentes dans la deuxième couche de revêtement sol-gel (soit la première couche sérigraphique) permettent d'augmenter la résistance à l'usure et de faciliter le nettoyage des parties de cette couche qui ne sont pas recouvertes par la deuxième couche sérigraphique constituant le décor.

Avantageusement, la densité surfacique des charges arrondies qui font saillie sur le revêtement extérieur sol-gel est comprise entre 50 et 300 charges/mm², et de préférence entre 100 et 250 charges/mm². Au-dessus d'une densité surfacique de 300 charges/mm², on observe une diminution de la résistance aux chocs thermiques, ainsi qu'une perte de brillance. Au-dessous d'une densité surfacique de 50 charges/mm², la répartition pondérale du revêtement sol-gel n'est pas suffisamment uniforme et on observe une sensibilisation à la rayure de la plaque de cuisson vitrocéramique ou à induction.

Avantageusement, le diamètre des charges arrondies est compris entre 5 µm et 40 µm et leur diamètre moyen est compris entre 15 µm et 20 µm, tandis que l'épaisseur de la ou de chacune des couches externes est comprise entre 15 et 30 µm. Ainsi, certaines des billes affleurent à la surface des couches de sérigraphie. Toutes les billes sont engagées dans la couche sol-gel sur une profondeur au moins égale à leur rayon, ce qui permet leur parfait ancrage dans les couches de sérigraphie.

De préférence, la ou les couches sérigraphiques externes comprennent chacune entre 5 et 30% en poids de charges métalliques. Au-dessous de 5% de billes, l'effet de celles-ci sur les propriétés du revêtement sol-gel devient négligeable, tandis qu'au-dessus de 30%, la cohésion entre les billes et le revêtement sol-gel est altérée.

A titre de support utilisable pour réaliser l'article culinaire selon l'invention, on utilisera avantageusement une calotte creuse présentant un fond et une paroi latérale s'élevant à partir du fond.

Le support utilisable dans le cadre de la présente invention pourra avantageusement être réalisé dans un matériau choisi parmi les métaux, le verre, les matières plastiques et les céramiques.

A titre de supports métalliques utilisables dans le procédé selon l'invention, on peut avantageusement citer les supports en aluminium ou en alliage d'aluminium, anodisé ou non, ou en aluminium poli, brossé ou microbillé, ou en acier inoxydable poli, brossé ou microbillé, ou en fonte d'acier ou d'aluminium, ou en cuivre martelé ou poli. On peut également citer les supports composites multicouches, par exemple les supports bicouches aluminium (ou alliage d'aluminium) /acier inoxydable et les supports tri-couches acier inoxydable /aluminium (ou alliage d'aluminium) /acier inoxydable.

La présente invention a également pour objet un procédé de fabrication d'un article culinaire qui comprend les étapes suivantes :
a) une étape de fourniture d'un support présentant la forme finale de l'article culinaire, qui comporte présentant un fond avec une face intérieure apte à recevoir des aliments et une face extérieure destinée à être disposée du côté d'une source de chaleur ;
b) une étape de préparation d'une composition aqueuse comprenant au moins un précurseur sol-gel de type alcoxyde métallique ;
c) une étape d'hydrolyse dudit précurseur sol-gel par introduction d'eau et d'un catalyseur acide ou basique, suivie d'une réaction de condensation engendrant la formation d'un alcool pour obtenir une composition sol-gel ;
d) une étape d'élimination partielle ou totale de l'alcool généré à l'étape c) d'hydrolyse-condensation, puis remplacement de l'alcool éliminé par un glycol ou un dérivé terpénique pour obtenir une composition sol-gel modifiée ;
e) une étape d'ajout d'une cellulose à la composition sol-gel pour en augmenter sa viscosité pour obtenir une composition sol-gel épaissie se présentant sous forme d'une pâte rhéofluidifiante ayant une viscosité entre 0,5 et 5 Pa.s. (soit entre 5 et 50 Poises) ;
f) une étape d'ajout des charges métalliques arrondies à la composition sol-gel épaissie (ou pâte rhéofluidifiante) pour obtenir une composition sol-gel épaissie et chargée ;
g) une étape d'application par sérigraphie sur l'intégralité de la face extérieure du support d'au moins une couche d'une composition sol-gel épaissie et chargée ayant une épaisseur d'au moins 20 µm à l'état humide ; puis
h) une étape de cuisson de ladite couche à une température comprise entre 180°C et 350°C.

On utilise de préférence à titre de précurseur un alcoxyde métallique choisi dans le groupe constitué par :
- les précurseurs répondant à la formule générale M₁(OR₁)ₙ,
   les précurseurs répondant à la formule générale M₂(OR₂)₍ₙ₋₁₎R₂', et
   les précurseurs répondant à la formule générale M₃(OR₃)₍ₙ₋₂₎R₃'₂, avec :
   R₁, R₂, R₃ ou R₃' désignant un groupement alkyle,
   R₂' désignant un groupement alkyle ou phényle,
   n étant un nombre entier correspondant à la valence maximale des métaux M₁, M₂ ou M₃,
   M₁ M₂ ou M₃ désignant un métal choisi parmi Si, Zr, Ti, Sn, Al, Ce, V, Nb, Hf, Mg ou Ln,

Avantageusement, l'alcoxyde métallique de la solution SG est un alcoxysilane.

A titre d'alcoxysilanes utilisables dans la solution SG du procédé de l'invention, on peut notamment citer le méthyltriméthoxysilane (MTMS), le tétraéthoxysilane (TEOS), le méthyltriéthoxysilane (MTES), le diméthyldiméthoxysilane, et leurs mélanges.

De manière préférée, on utilisera les alcoxysilanes MTES et TEOS, car ils présentent l'avantage de ne pas contenir de groupements méthoxy. En effet l'hydrolyse des méthoxy conduit à la formation de méthanol dans la formulation sol-gel, ce qui compte tenu de son classement toxique nécessite des précautions supplémentaires lors de l'application. A contrario l'hydrolyse des groupements éthoxy ne génère que de l'éthanol possédant un classement plus favorable et donc des prescriptions d'utilisations moins contraignantes pour le revêtement sol-gel.

Selon un mode de réalisation avantageux du procédé selon l'invention, l'étape e) d'ajout de cellulose pour former une composition sol-gel épaissie (ou pâte rhéofluidifiante) peut également comprendre l'ajout de liants organiques autres que la cellulose en une quantité adaptée à l'obtention d'une composition-sol-gel épaissie présentant une viscosité entre 0,5 et 5 Pa.s. (soit entre 5 et 50 Poises).

A titre de liants organiques utilisables dans la pâte rhéofluidifiante selon l'invention, on peut notamment citer les gommes, l'éthylcellulose, par exemple celle commercialisée par la société DOW sous la dénomination commerciale DOW ETHOCEL STD 20®, les résines acryliques, comme par exemple celle commercialisée sous la dénomination commerciale ROHAGIT® par la société EVONIK.

Enfin, le procédé selon l'invention peut en outre comprendre une étape supplémentaire d'application par pulvérisation d'une composition sol-gel telle qu'obtenue à l'issue de l'étape c) sur l'intégralité de la face extérieure du support, pour former une couche sol-gel pulvérisée, sur laquelle est ensuite appliquée par sérigraphie la composition sol-gel épaissie et chargée telle qu'obtenue à l'issue de l'étape f).

L'application par sérigraphie de la composition sol-gel épaissie et chargée sous forme de pâte rhéofluidifante peut être réalisée en mono- ou en multicouches.

D'autres avantages et particularités de la présente invention résulteront de la description qui va suivre, donnée à titre d'exemple non limitatif et faite en référence aux figures annexées :
- la figure 1 représente une vue schématique en coupe d'un article culinaire conforme à l'invention selon une première variante de réalisation,
- la figure 2 représente une vue schématique en coupe d'un support d'article culinaire conforme à l'invention selon une deuxième variante de réalisation.

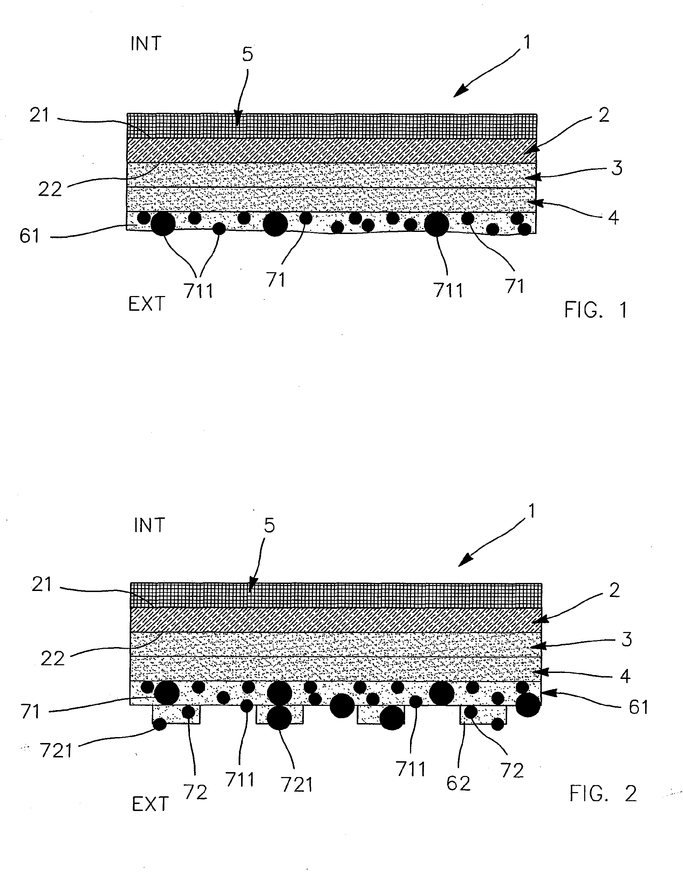

Sur la figure 1 annexée, on a représenté un article culinaire 1 en fonte qui comprend une calotte creuse définissant un fond 2, dont la face extérieure 22 est recouverte d'une première couche de revêtement sol-gel 3 (ou couche d'adhérence). Cette couche d'adhérence 3 est elle-même recouverte d'une couche de revêtement sol-gel sérigraphique 61 continue comprenant des charges sphériques métalliques 71, 711, dont certaines 711 font saillie à la surface de cette couche 61.

Dans la variante illustrée sur la figure 2 annexée, une couche de revêtement sol-gel sérigraphique 62 discontinue formant décor recouvre partiellement la couche sérigraphique 61. Cette couche de revêtement sol-gel 62 comprend également des charges sphériques métalliques 72, 721, dont une partie 721 fait saillie à la surface de cette couche. Une partie des charges 711 de la couche sérigraphique 61 sous jacente fait saillie à la surface des parties de cette couche 61 qui ne sont pas recouvertes par la couche de décor 62.

Les figures 1 et 2 montrent également que la surface intérieure 21 du fond 2 est revêtue d'une couche antiadhésive 5.

Avantageusement, la couche d'adhérence 3 recouvre toute la face extérieure de la calotte (non représentée sur les figures), tandis que les couches de revêtement sol-gel sérigraphiques 61, 62 sont appliquées uniquement dans la zone du fond 2 de l'article 1.

La couche d'adhérence 3 est appliquée par pulvérisation, trempage par immersion (« dip coating ») ou par étalement (« spin coating »), tandis que les deux couches de revêtement sol-gel sérigraphiques 61, 62 contenant les billes métalliques 71, 711, 72, 721 sont obtenues par application, puis séchage de pâtes rhéofluidifiantes et thixotropes, ces pâtes pouvant être frittées à une température de l'ordre de 150°C à 350°C.

Lors de l'application par sérigraphie des pâtes rhéofluidifiantes pour former les couches de revêtement sol-gel 61, 62 sérigraphiques, celles-ci sont poussées à travers les mailles d'un écran au moyen d'une racle qui dépose les billes 71, 711, 72, 721 dans leur couche sol-gel 61, 62 respective. Ainsi, les billes 71, 711 de la deuxième couche sol-gel 61 (ou première couche sérigraphique) prennent appui sur la surface de la couche sol-gel sous-jacente qui est la couche d'adhérence 3, tandis que les billes 72, 721 de la troisième couche sol-gel 62 (ou deuxième couche sérigraphique) prennent appui sur les billes 71, 711 de la deuxième couche sol-gel 62 (ou première couche sérigraphique).

Les différentes couches de type sol-gel 3, 61, et le cas échéant la couche 62, sont cuites simultanément à une température de l'ordre de 150°C-350°C.

Chaque couche sérigraphique 61, 62 contient entre 5 et 30% en poids de charges sphériques 71, 711, 72, 721.

Pour ce qui concerne plus particulièrement la deuxième variante de réalisation de l'invention, lors de l'application de la troisième couche sol-gel 62, les billes 72, 721 de celle-ci ne peuvent s'enfoncer dans la deuxième couche sol-gel 61 car les billes 71, 711 contenues dans cette dernière 61 limitent l'enfoncement des billes 72, 721. Les billes 72, 721 de la deuxième couche sérigraphique 62 permettent à celle-ci de résister à l'usure, tout en préservant l'aspect esthétique du décor en relief formé par cette couche 62. Les billes 71, 711, outre les propriétés indiquées plus haut, protègent contre l'usure des parties de la couche sol-gel 61 qui ne sont pas recouvertes par la couche discontinue 2, tout en facilitant le nettoyage de ces parties.

On donne ci-après un mode de réalisation d'un article culinaire conforme à la deuxième variante de réalisation de l'invention, qui comprend les étapes suivantes :
- pulvérisation sur la face extérieure de la calotte de l'ustensile d'une composition sol-gel (non épaissie) pour former une couche dite d'adhérence 3 ;
- après séchage de la couche d'adhérence, on applique sur celle-ci, par sérigraphie, une couche 61 de pâte sol-gel rhéofluidifiante thixotrope renfermant des billes métalliques 71, 711 ; et
- après séchage de la couche de pâte 61, on applique sur celle-ci, également par sérigraphie, une couche 62 discontinue d'une deuxième pâte sol-gel rhéofluidifiante thixotrope identique à la première pâte sérigraphique renfermant des billes métalliques 72, 721 et qui est destinée à former après cuisson un décor.

La composition de chacune des couches sol-gel 3, 61, 62 est indiquée ci-après :

**Tableau 1 : Composition chimique de la composition sol-gel destinée à former la couche 3 d'adhérence**

| **Composants** | **Pourcentage massique(%)** |
|---|---|
| Précurseur répondant à la formule générale M₂(OR₂)₍ₙ₋₁₎R₂' | 80 à 97% |
| Précurseur répondant à la formule générale M₃(OR₃)₍ₙ₋₂₎R₃'₂ | 0 à 20% |
| Catalyseur acide ou basique | 0,1 à 5% |
| eau | 1 à 10% |
| Agent chélatant (par exemple un alcool) | 0 à 10% |

**Tableau 2 : Composition chimique des pâtes de sérigraphie rhéofluidifiantes**

| **Composants** | **Pourcentage massique(%)** |
|---|---|
| Dérivés résines ou terpéniques | 20 à 50% |
| Composition sol gel modifiée | 30 à 50% |
| Pigments minéraux | 0 à 10% |
| Charges sphériques métalliques | 5 à 30% en fonction de leur densité intrinsèque |

La composition sol-gel modifiée pour la pâte sérigraphique est obtenue comme suit :
o de même que pour la composition sol-gel d'adhérence, on part d'une composition sol-gel initiale à base d'un précurseur de type alcoxyde métallique tel que défini précédemment ;
o cet alcoxyde métallique est ensuite hydrolysé dans un réacteur en présence d'eau et d'un acide ou d'une base (de préférence hydroxyde de Na, K alcalins et alcalino-terreux et il y a formation d'alcool par une réaction de condensation;
o une filtration de la composition sol-gel ainsi obtenue peut être nécessaire si des grains ont été formés (par exemple génération d'agglomérats formés in situ lors de l'hydrolyse condensation des précurseurs alcoxydes métalliques, notamment si elle réalisée par voie alcaline) lors de la réaction d'hydrolyse condensation ;
o l'alcool ainsi généré lors de la réaction d'hydrolyse-condensation est retiré de la composition sol-gel par une évaporation/distillation (améliorée par un tirage au vide) et est ensuite remplacé par un glycol ou un dérivé terpénique (terpineol) pour former une composition sol-gel modifiée ;
o la composition sol-gel modifiée est ensuite mélangée avec une cellulose (Dow Ethocel STD 20®) afin d'en augmenter la viscosité et en faciliter l'application par sérigraphie. Une viscosité cible de 0,5 à 5 Pa.s. (soit entre 5 et 50 Poises) est visée. L'ajout de liants organiques autres de type CMC, gomme de xanthane peut être utile pour ajuster la rhéologie souhaitée de la pâte sérigraphie ;
o Dans une dernière étape, on ajoute les charges métalliques (par exemple Hoganas 316 HIC 15 µ) par dispersion et on obtient la pâte de sérigraphie chargée.

Cette couche de sérigraphie sol gel pourra être décorative et donc être chargée avec des pigments minéraux classiques et/ou interférentielles (ex : Merck Iriodin Lavared 4504®).

Les pâtes sérigraphiques peuvent s'appliquer en monocouche ou multicouches soit sur métal directement soit sur un revêtement préalablement appliqué par spray puis éventuellement séché.

La phase de co-cuisson des diverses couches de revêtement sol gel peut être réalisée dans un four à convection classique en atmosphère classique, inerte ou oxydante.

## Revendications

1. Article culinaire (1), présentant un fond (2) avec une face intérieure (21) apte à recevoir des aliments et une face extérieure (22) destinée à être disposée du côté d'une source de chaleur, ladite face extérieure (22) étant revêtue d'un revêtement extérieur (3) sol-gel qui comprend des charges arrondies et se présente sous forme d'un film continu d'un matériau comprenant une matrice d'au moins un polyalcoxylate métallique,
ledit article (1) étant **caractérisé en ce que** lesdites charges arrondies (71, 711, 72, 721) sont des charges métalliques, dont une partie fait saillie sur ledit revêtement sol-gel (3) en étant réparties de manière homogène à la surface dudit revêtement (3).

2. Article culinaire (1) selon la revendication 1, **caractérisé en ce que** ledit revêtement extérieur (3) sol-gel comprend successivement à partir du fond :
- une première couche (31) de revêtement sol-gel essentiellement exempte de charges arrondies, ladite première couche (31) recouvrant la face extérieure (22) du fond (2), et
- une deuxième couche (32) de revêtement sol-gel comprenant lesdites charges arrondies (71, 711), ladite deuxième couche (32) recouvrant complètement ladite première couche (31).

3. Article culinaire (1) selon la revendication 2, **caractérisé en ce que** la deuxième couche (32) de revêtement sol-gel est partiellement recouverte par une troisième couche (33) de revêtement sol-gel, qui est une couche sérigraphique discontinue constituant un décor et comprenant également des charges arrondies (72, 721).

4. Article culinaire (1) selon l'une quelconque des revendications 1 à 3, **caractérisé en ce que** la densité surfacique des charges arrondies (711, 721) qui font saillie sur ledit revêtement extérieur (3) sol-gel est comprise entre 50 et 300 charges/mm².

5. Article culinaire (1) selon la revendication 4, **caractérisé en ce que** la densité surfacique des charges arrondies (711, 721) qui font saillie sur ledit revêtement extérieur (3) sol-gel est comprise entre 100 et 250 charges/mm².

6. Article culinaire (1) selon l'une quelconque des revendications 1 à 5, **caractérisé en ce que** le diamètre des charges sphériques (71, 711, 72, 721) est compris entre 5 et 40 µm, leur diamètre moyen étant compris entre 15 et 20 µm, et l'épaisseur de la ou de chacune des couches externes (32, 33) étant comprise entre 15 et 30 µm.

7. Article culinaire (1) selon l'une quelconque des revendications 1 à 6, **caractérisé en ce que** la ou lesdites couches externes (31, 32) comprennent chacune entre 5 et 30% en poids de charges métalliques (71, 711, 72, 721).

8. Article culinaire (1) selon l'une quelconque des revendications précédentes, **caractérisé en ce que** le support (2) est un support métallique en aluminium anodisé ou non, ou en aluminium poli, brossé ou microbillé, ou en acier inoxydable poli, brossé ou microbillé, ou en fonte d'acier ou d'aluminium, ou en cuivre martelé ou poli.

9. Procédé de fabrication d'un article culinaire (1), **caractérisé en ce qu'**il comprend les étapes suivantes :
a) une étape de fourniture d'un support (2) présentant au moins deux faces opposées (31, 32) ;
b) une étape de préparation d'une composition aqueuse comprenant au moins un précurseur sol-gel de type alcoxyde métallique ;
c) une étape d'hydrolyse dudit précurseur sol-gel par introduction d'eau et d'un catalyseur acide ou basique, suivie d'une réaction de condensation engendrant la formation d'un alcool pour obtenir une composition sol-gel ;
d) une étape d'élimination partielle ou totale de l'alcool généré à l'étape c) d'hydrolyse-condensation, puis remplacement de l'alcool éliminé par un glycol ou un dérivé terpénique pour obtenir une composition sol-gel modifiée ;
e) une étape d'ajout d'une cellulose à la composition sol-gel pour en augmenter sa viscosité pour obtenir une composition sol-gel épaissie présentant une viscosité entre 0,5 et 5 Pa.s. ;
f) une étape d'ajout des charges métalliques arrondies (71, 711, 72, 721) à la composition sol-gel pour obtenir une composition sol-gel épaissie et chargée ;
g) application par sérigraphie sur l'intégralité de la face extérieure (22) du support (2) d'au moins une couche de la composition sol-gel épaissie et chargée ayant une épaisseur d'au moins 20 µm à l'état humide ; puis
h) cuisson de ladite couche à une température comprise entre 180°C et 350°C.

10. Procédé selon la revendication 9, **caractérisé en ce que** l'étape e) d'ajout de cellulose pour former une composition sol-gel épaissie comprend également l'ajout de liants organiques autres que la cellulose en une quantité adaptée à l'obtention d'une composition-sol-gel épaissie présentant une viscosité entre 0,5 et 5 Pa.s.

11. Procédé selon la revendication 9 ou 10, **caractérisé en ce qu'**il comprend en outre une étape supplémentaire d'application par pulvérisation d'une composition sol-gel telle qu'obtenue à l'issue de l'étape c) sur l'intégralité de la face extérieure (22) du support (2) pour former une couche sol-gel pulvérisée, sur laquelle est ensuite appliquée par sérigraphie la composition sol-gel épaissie et chargée telle qu'obtenue à l'issue de l'étape f).

12. Procédé selon l'une quelconque des revendications 9 à 11, **caractérisé en ce que** l'application par sérigraphie de la composition sol-gel épaissie et chargée est réalisée en mono- ou multicouches.

13. Procédé selon l'une quelconque des revendications 10 à 12, **caractérisé en ce que** le support (2) présente la forme finale de l'article culinaire, comportant un fond (2) avec une face intérieure (21) apte à recevoir des aliments et une face extérieure (22) destinée à être disposée du côté d'une source de chaleur.
